# EUROPÄISCHE PATENTSCHRIFT

(11) **EP 3 909 098 B1**
(45) Veröffentlichungstag und Bekanntmachung des Hinweises auf die Patenterteilung: **01.02.2023**
(21) Anmeldenummer: 19818099.4
(22) Anmeldetag: 16.12.2019
(51) Int. Cl.: H01R 13/506, H01R 13/516, B60L 53/16

(54) **STECKVERBINDERTEIL MIT EINEM MIT EINEM GEHÄUSETEIL ZU VERBINDENDEN VERBINDERTEIL**
PLUG CONNECTOR PART HAVING A CONNECTOR PART TO BE CONNECTED TO A HOUSING PART
PIÈCE DE CONNECTEUR ENFICHABLE POURVUE D'UNE PIÈCE DE CONNECTEUR À RELIER À UNE PIÈCE DE BOÎTIER

(30) Priorität: 11.01.2019 BE 201905016
(43) Veröffentlichungstag der Anmeldung: 17.11.2021
(73) Patentinhaber: Phoenix Contact e-Mobility GmbH, 32816 Schieder-Schwalenberg (DE)
(72) Erfinder: FELDNER, Ralf, 32805 Horn-Bad Meinberg (DE); GARTH, Carsten, 32657 Lemgo (DE); DEPPE, Cedric, 32694 Dörentrup (DE); GEBHARDT, Tanja, 33189 Schlangen (DE)
(74) Vertreter: Muth, Bruno
(86) Internationale Anmeldenummer: PCT/EP2019/085344
(87) Internationale Veröffentlichungsnummer: WO 2020/144005

(56) Entgegenhaltungen:
- EP-A1- 2 955 796
- EP-A2- 1 049 211

## Beschreibung

Die Erfindung betrifft ein Steckverbinderteil zum Verbinden mit einem Gegensteckverbinderteil nach dem Oberbegriff des Anspruchs 1 sowie ein Verfahren zum Montieren eines Steckverbinderteils.

Ein solches Steckverbinderteil umfasst ein Gehäuseteil und ein mit dem Gehäuseteil zu verrastendes Verbinderteil, das einen Steckabschnitt aufweist, an dem zumindest ein (elektrisches) Kontaktelement zum steckenden Verbinden mit dem Gegensteckverbinderteil angeordnet ist. Ein Abdeckelement ist mit dem Verbinderteil zu verbinden und weist zumindest einen Leitungsabgang zum Aufnehmen einer mit dem Verbinderteil verbundenen elektrischen Leitung auf.

Beispielsweise ist ein entsprechendes Steckverbinderteil aus der EP 1 049 211 A2 bekannt. Ein solches Steckverbinderteil kann z.B. als Ladebuchse zum Aufladen eines elektrisch angetriebenen Fahrzeugs (auch bezeichnet als Elektrofahrzeug) Verwendung finden. Eine solche Ladebuchse ist beispielswiese an einem Fahrzeug angeordnet und kann steckend mit einem zugeordneten Gegensteckverbinderteil in Form eines Ladesteckers an einem an eine Ladestation angeschlossenen Kabel verbunden werden, um auf diese Weise eine elektrische Verbindung zwischen der Ladestation und dem Fahrzeug herzustellen.

Insbesondere bei auf Seiten eines Fahrzeugs anzuordnenden Ladebuchsen, auch bezeichnet als Inlet, ist üblicherweise vorgesehen, ein von außen sichtbares Gehäuseteil nach Wünschen eines Fahrzeugherstellers für unterschiedliche Fahrzeuge unterschiedlich variabel zu gestalten. Ein Verbinderteil, das den Steckabschnitt mit daran angeordneten elektrischen Kontaktelementen ausbildet, ist hierbei jedoch üblicherweise mit Blick auf sein Steckgesicht genormt. Weil Gehäuseteile für unterschiedliche Fahrzeuge unterschiedlich gestaltet sind, ist mit bisherigen Ansätzen schwierig möglich, Gleichteile für die Ausbildung des Steckverbinderteils zu verwenden, weil herkömmlich üblicherweise auch das Verbinderteil zur Befestigung an dem (abhängig vom Fahrzeug variablen) Gehäuseteil angepasst werden muss.

Herkömmlich ist vorgesehen worden, ein solches Verbinderteil durch Anbringen von Schrauben mit dem Gehäuseteil zu verbinden. Dies macht zusätzliche Montageschritte erforderlich und erschwert somit den Montageprozess. Wünschenswert ist somit ein Steckverbinderteil, bei dem ein Verbinderteil in einfacher, leicht zu montierender Weise mit einem Gehäuseteil verbunden werden kann.

Herkömmlich ist zudem vorgesehen worden, ein Abdeckelement - das zum Beispiel als Tülle ausgeführt sein kann und zur insbesondere rückseitigen Abdichtung des Steckverbinderteils dient dort, wo eine elektrische Leitung hin zu dem Verbinderteil geführt wird - mittels einer zu verschraubenden Schelle und somit klemmend mit dem Verbinderteil zu verbinden. Dies erschwert den Montageprozess des Steckverbinderteils weiter.

Bei einem aus der DE 10 2014 215 077 A1 bekannten Steckverbinderteil in Form einer Ladesteckdose ist eine Nut-Feder-Verbindung zum Anordnen der Ladesteckdose an einer Haltevorrichtung vorgesehen.

Aus der DE 10 2012 019 605 A1 ist ein Modulsystem zum Erstellen einer Vielzahl von Varianten einer Ladevorrichtung bekannt. Bei diesem Modulsystem kann eine Ladedose beispielsweise über einen Befestigungsflansch über Schraubverbindungen mit einem Ladedosenhalter verbunden werden.

Aus der WO 2018/091422 A1 ist ein Steckverbinderteil bekannt, das ein Gehäuse mit einer darin geformten Stecköffnung zum Einstecken eines Gegensteckverbinderteils und ein Basisteil, das mit dem Gehäuseteil verbindbar ist, aufweist. Das Basisteil ist über eine Verbindung nach Art eines Bajonettverschlusses mit dem Gehäuseteil verbindbar, wobei die Verbindung über einen Verriegelungsrahmen fixierbar ist.

Der Erfindung liegt die Aufgabe zu Grunde, ein Steckverbinderteil und ein Verfahren zum Montieren eines Steckverbinderteils zur Verfügung zu stellen, die eine einfache Montage unter Befestigung eines Abdeckelements an dem Verbinderteil ermöglichen.

Diese Aufgabe wird durch einen Gegenstand mit den Merkmalen des Anspruchs 1 gelöst.

Demnach weist das Steckverbinderteil ein Rahmenteil auf, das mit dem Verbinderteil rastend zu verbinden ist und ausgebildet ist, in einer an das Verbinderteil angesetzten Stellung das Abdeckelement zu dem Verbinderteil festzulegen.

Das Steckverbinderteil ist somit mehrteilig mit modular zu verbindenden Bauteilen ausgebildet. Das Verbinderteil, das über den daran geformten Steckabschnitt und daran angeordnete elektrische Kontaktelemente ein Steckgesicht ausbildet, ist rastend mit dem Gehäuseteil verbindbar, das einen sogenannten Varianzbereich zur Anordnung des Steckverbinderteils zum Beispiel an einem Fahrzeug ausbildet. Während das Verbinderteil als Gleichteil zur Verwendung an unterschiedlichen Steckverbinderteilen ausgebildet sein kann und an seinem Steckgesicht zum Beispiel nach einem Standard für ein Ladesystem genormt ist, ist das Gehäuseteil variabel und abhängig von zum Beispiel einem Fahrzeugtyp gestaltet, an dem das Steckverbinderteil beispielsweise als Ladebuchse zum Einsatz kommen soll. Die modulare Ausgestaltung des Verbinderteils im Zusammenspiel mit dem nach Kundenwünschen variablen Gehäuseteil ermöglicht somit die Verwendung von Gleichteilen für das Verbinderteil.

Auch das Rahmenteil ist modular ausgebildet und rastend mit dem Verbinderteil zu verbinden. Das Rahmenteil dient hierbei dazu, ein Abdeckelement, das zur Abdichtung am Verbinderteil in einem Bereich dient, in dem eine oder mehrere elektrische Leitungen an dem Verbinderteil angeordnet sind, zu dem Verbinderteil zu fixieren. Das Fixieren des Abdeckelements an dem Verbinderteil erfolgt durch einfache Verrastung des Rahmenteils mit dem Verbinderteil, ohne dass weitere Maßnahmen, insbesondere zum Herstellen einer Schraubverbindung oder dergleichen, getroffen werden müssen. Die Montage und Anordnung des Abdeckelements kann somit einfach und komfortabel erfolgen.

Dadurch, dass sowohl das Gehäuseteil mit dem Verbinderteil als auch das Rahmenteil mit dem Verbinderteil zu verrasten sind, kann auf Verschraubungen zum Verbinden der einzelnen Teile miteinander verzichtet werden, was die Montage des Steckverbinderteils insgesamt einfach gestalten kann.

Das Abdeckelement ist beispielsweise als aus einem Weichmaterial, zum Beispiel einem Gummimaterial gefertigte Tülle ausgebildet und ist in diesem Fall vorzugsweise flexibel verformbar. Das Abdeckelement kann alternativ beispielsweise die Form eines starren Deckels aufweisen, an dessen dem Verbinderteil zugewandten Rand beispielsweise eine Dichtung angesetzt oder (mittels Spritzgießen) angeformt sein kann.

Das Abdeckelement wird beispielsweise mit einem Randabschnitt an das Verbinderteil angesetzt und ist in der an das Verbinderteil angesetzten Stellung des Rahmenteils über das Rahmenteil an dem Verbinderteil gehalten. Mit seinem Randabschnitt kann das Abdeckelement hierbei derart in Anlage mit dem Verbinderteil sein, dass ein Übergang zwischen dem Verbinderteil und dem Abdeckelement feuchtigkeitsdicht abgedichtet ist und somit Feuchtigkeit nicht in einen Bereich gelangen kann, in dem eine oder mehrere elektrische Leitungen an dem Verbinderteil angeordnet sind. Die eine oder die mehreren elektrischen Leitungen werden hierbei über einen oder mehrere Leitungsabgänge aus dem Abdeckelement herausgeführt, wobei ein Übergang zwischen dem Abdeckelement und den elektrischen Leitungen vorteilhafterweise feuchtigkeitsdicht abgedichtet ist.

In einer Ausgestaltung weist das Gehäuseteil zumindest ein erstes Rastelement und das Verbinderteil zumindest ein erstes Gegenrastelement auf. Das zumindest eine erste Rastelement und das zumindest eine erste Gegenrastelement können zum Verbinden des Verbinderteils mit dem Gehäuseteil entlang einer (ersten) Montagerichtung miteinander in Eingriff gebracht werden, sodass das Verbinderteil und das Gehäuseteil über das zumindest eine erste Rastelement und das zumindest eine erste Gegenrastelement formschlüssig miteinander verrastet werden.

Das zumindest eine erste Rastelement und/oder das zumindest eine erste Gegenrastelement sind hierbei zumindest über einen gewissen Auslenkweg elastisch auslenkbar, sodass bei Ansetzen des Gehäuseteils und des Verbinderteils aneinander das zumindest eine erste Rastelement und/oder das zumindest eine erste Gegenrastelement elastisch ausgelenkt werden können und das zumindest eine erste Rastelement und das zumindest eine erste Gegenrastelement somit formschlüssig miteinander in Eingriff schnappen können.

Beispielsweise kann das zumindest eine erste Gegenrastelement als starrer Rastvorsprung an dem Verbinderteil ausgebildet sein. In diesem Fall weist das zumindest eine erste Gegenrastelement beispielsweise eine Auflaufschräge auf, die ermöglicht, dass das zumindest eine erste Rastelement des Gehäuseteils beim Ansetzen des Gehäuseteils und des Verbinderteils aneinander entlang der (ersten) Montagerichtung auf das zumindest eine erste Gegenrastelement auflaufen kann, um den Formschluss zwischen dem Gehäuseteil und dem Verbinderteil herzustellen.

In einer Ausgestaltung weist das Gehäuseteil einen Gehäusekörper auf, wobei das zumindest eine erste Rastelement als entlang der (ersten) Montagerichtung von dem Gehäusekörper erstreckter Rastfinger ausgebildet ist. Ein oder mehrere erste Rastelemente stehen somit als Rastfinger von dem Gehäusekörper des Gehäuseteils vor und können elastisch vorzugsweise quer zur (ersten) Montagerichtung ausgelenkt werden, sodass bei Ansetzen des Gehäuseteils und des Verbinderteils aneinander eine formschlüssige Rastverbindung zwischen dem Verbinderteil und dem Gehäuseteil hergestellt werden kann.

Insbesondere in einer Ausgestaltung, in der vorgesehen ist, dass zunächst das Gehäuseteil und das Verbinderteil miteinander verbunden werden und sodann das Rahmenteil an das Verbinderteil angesetzt wird, kann vorgesehen sein, dass das Rahmenteil zusätzlich zur Festlegung des Abdeckelements an dem Verbinderteil dazu dient, die rastende Verbindung zwischen dem Verbinderteil und dem Gehäuseteil zu sichern, indem das Rahmenteil in der an das Verbinderteil angesetzten Stellung auf das zumindest eine erste Rastelement des Gehäuseteils einwirkt und dieses in seiner Verbindung mit dem zugeordneten zumindest einen ersten Gegenrastelement des Verbinderteils verriegelt. Ist das Rahmenteil an das Verbinderteil angesetzt, kann eine Verbindung zwischen dem Verbinderteil und dem Gehäuseteil somit nicht ohne weiteres gelöst werden, zumindest nicht ohne Abnehmen des Rahmenteils und anschließendes Lösen der Rastverbindung zwischen dem Gehäuseteil und dem Verbinderteil.

Das Rahmenteil kann hierzu beispielsweise auf ein an dem zumindest einen ersten Rastelement geformtes Eingriffselement nach Art einer Lasche einwirken, um das zumindest eine erste Rastelement in seiner mit dem zumindest einen ersten Gegenrastelement verrasteten Stellung zu verriegeln. Das Rahmenteil kann das Eingriffselement beispielsweise umgreifen und das Eingriffselement somit in Position halten, sodass ein Auslenken des zumindest einen ersten Rastelements verhindert ist.

In einer Ausgestaltung weist das Rahmenteil zumindest ein zweites Rastelement und das Verbinderteil zumindest ein zweites Gegenrastelement auf. Das zumindest eine zweite Rastelement des Rahmenteils und das zumindest eine zweite Gegenrastelement des Verbinderteils können zum Verbinden des Rahmenteils mit dem Verbinderteil entlang einer (zweiten) Montagerichtung rastend miteinander in Eingriff gebracht werden, um auf diese Weise einen Formschluss zwischen dem Rahmenteil und dem Verbinderteil herzustellen. Auch das Rahmenteil kann somit rastend mit dem Verbinderteil verbunden werden, in dem Rastelemente mit zugeordneten Gegenrastelementen rastend in Eingriff gebracht werden.

Die Montage erfolgt allgemein entlang einer Achse, wobei die erste Montagerichtung und die zweite Montagerichtung entlang der Achse ausgerichtet sind. Die zweite Montagerichtung kann der ersten Montagerichtung entgegengesetzt, kann aber auch der ersten Montagerichtung gleichgerichtet sein.

Das zumindest eine zweite Rastelement des Rahmenteils und/oder das zumindest eine Gegenrastelement des Verbinderteils können um einen gewissen Verstellweg elastisch auslenkbar sein, um bei Ansetzen des Rahmenteils und des Verbinderteils aneinander ein rastendes Verbinden zu ermöglichen. Beispielsweise kann das zumindest eine zweite Rastelement des Rahmenteils elastisch federnd ausgebildet sein, während das zumindest eine zweite Gegenrastelement des Verbinderteils als starrer Rastvorsprung ausgestaltet ist. In diesem Fall weist das zumindest eine zweite Gegenrastelement beispielsweise eine Auflaufschräge auf, die ein Auflaufen des zumindest einen zweiten Rastelements auf das Gegenrastelement zum Herstellen einer formschlüssigen Verbindung bei Ansetzen des Rahmenteils und des Verbinderteils aneinander ermöglicht.

In einer Ausgestaltung weist das Rahmenteil einen Rahmenkörper auf. Das zumindest eine zweite Rastelement des Rahmenteils ist in diesem Fall beispielsweise als Rastfinger ausgebildet, der entlang der (zweiten) Montagerichtung von dem Rahmenkörper erstreckt ist und somit von dem Rahmenkörper vorsteht. In diesem Fall ist vorzugsweise das zumindest eine zweite Rastelement elastisch federnd ausgestaltet und kann bei Ansetzen des Rahmenteils und des Verbinderteils aneinander elastisch ausgelenkt werden, um beim Ansetzen beiseite gedrängt zu werden und eine schnappende, formschlüssige Verbindung mit dem Verbinderteil herzustellen.

Insbesondere in einer Ausgestaltung, in der zunächst das Rahmenteil zum Festlegen des Abdeckelements an das Verbinderteil anzusetzen und sodann das Gehäuseteil mit dem Verbinderteil zu verbinden ist, kann vorgesehen sein, dass das Gehäuseteil ausgebildet ist, auf das zumindest eine zweite Rastelement des Rahmenteils einzuwirken, um die rastende Verbindung zwischen dem Verbinderteil und dem Rahmenteil gegen ein Lösen zu verriegeln. In diesem Fall wird die Verbindung zwischen dem Rahmenteil und dem Verbinderteil somit über das Gehäuseteil gesichert, indem das Gehäuseteil auf das zumindest eine zweite Rastelement einwirkt und dieses in seinem formschlüssigen Eingriff mit dem zugeordneten zumindest einen zweiten Gegenrastelement des Verbinderteils hält. Das Gehäuseteil kann hierzu das zumindest eine zweite Rastelement beispielsweise umgreifen derart, dass ein Auslenken des zumindest einen zweiten Rastelements für ein Lösen der formschlüssigen Verbindung verhindert ist.

In einer Ausgestaltung weisen das Gehäuseteil mehrere erste Rastelemente und das Rahmenteil mehrere zweite Rastelemente auf, die jeweils als Rastfinger ausgestaltet sein können und somit einerseits von dem Gehäusekörper des Gehäuseteils und andererseits von dem Rahmenkörper des Rahmenteils vorstehen. In einer montierten Stellung des Steckverbinderteils, in der das Gehäuseteil, das Verbinderteil und das Rahmenteil miteinander verbunden sind, kann hierbei ein erstes Rastelement des Gehäuseteils zwischen zwei zweiten Rastelementen des Rahmenteils und/oder ein zweites Rastelement des Rahmenteils zwischen zwei ersten Rastelementen des Gehäuseteils aufgenommen sein. Die ersten Rastelemente und die zweiten Rastelemente können jeweils umfänglich um die Achse der Montagerichtung verteilt an dem Gehäusekörper einerseits und dem Rahmenkörper andererseits angeordnet sein und dabei eine Kammstruktur ausbilden, wobei in der montierten Stellung des Steckverbinderteils die Rastelemente so ineinander greifen, dass zwischen zwei zweiten Rastelementen jeweils ein erstes Rastelement und zwischen zwei ersten Rastelementen jeweils ein zweites Rastelement zu liegen kommt.

In einer Ausgestaltung weist das Verbinderteil ein Gehäuseteil auf, an dem eine Mehrzahl von ersten Gegenrastelementen zum rastenden Verbinden mit den ersten Rastelementen des Gehäuseteils und eine Mehrzahl von zweiten Gegenrastelementen zum rastenden Verbinden mit den zweiten Rastelementen des Rahmenteils angeordnet sind. Die ersten Gegenrastelemente und die zweiten Gegenrastelemente können hierbei alternierend zueinander angeordnet sein, betrachtet entlang einer Umfangsrichtung um die Achse der Montagerichtung. Die ersten Gegenrastelemente und die zweiten Gegenrastelemente sind somit derart an dem Gehäuse des Verbinderteils angeordnet, dass auf ein erstes Gegenrastelement ein zweites Gegenrastelement und darauf wieder ein erstes Gegenrastelement folgt.

In einer Ausgestaltung weist das Steckverbinderteil ein Dichtelement auf, das beispielsweise zwischen dem Verbinderteil und dem Gehäuseteil angeordnet ist und zwischen dem Verbinderteil und dem Gehäuseteil wirkt (wenn das Verbinderteil und das Gehäuseteil aneinander angesetzt sind), um einen Übergang zwischen dem Verbinderteil und dem Gehäuseteil feuchtigkeitsdicht abzudichten. Über das Dichtelement kann hierbei auch eine elastische Vorspannung zwischen dem Gehäuseteil und dem Verbinderteil bestehen, die bewirkt, dass die ersten Rastelemente des Gehäuseteils und die ersten Gegenrastelemente des Verbinderteils spielfrei miteinander in Eingriff gehalten werden.

Dadurch, dass zudem - in einer Ausgestaltung - das Abdeckelement mit einem Randabschnitt zwischen dem Rahmenteil und dem Verbinderteil zu liegen kommt und aus einem flexiblen, elastischen Material, zum Beispiel einem Gummimaterial, gefertigt ist, ist zudem auch ein Übergang zwischen dem Abdeckelement und dem Verbinderteil feuchtigkeitsdicht abgedichtet, wobei über den Randabschnitt eine elastische Vorspannung zwischen dem Rahmenteil und dem Verbinderteil bewirkt sein kann, die die zweiten Rastelemente des Rahmenteils und die zweiten Gegenrastelemente des Verbinderteils spielfrei miteinander in Eingriff hält. Auch die Verbindung zwischen dem Rahmenteil und dem Verbinderteil ist somit spielfrei gemacht.

Die Aufgabe wird auch gelöst durch ein Verfahren zum Montieren eines Steckverbinderteils zum Verbinden mit einem Gegensteckverbinderteil, bei dem ein Verbinderteil, das einen Steckabschnitt aufweist, an dem zumindest ein Kontaktelement zum steckenden Verbinden mit dem Gegensteckverbinderteil angeordnet ist, mit einem Gehäuseteil verrastet und ein Abdeckelement, das zumindest einen Leitungsabgang zum Aufnehmen einer mit dem Verbinderteil verbundenen elektrischen Leitung aufweist, mit dem Verbinderteil verbunden wird. Dabei ist vorgesehen, dass ein Rahmenteil mit dem Verbinderteil rastend verbunden wird, wobei das Rahmenteil in einer an das Verbinderteil angesetzten Stellung das Abdeckelement zu dem Verbinderteil festlegt.

Hierbei kann vorgesehen sein, dass zunächst das Verbinderteil mit dem Gehäuseteil verrastet und sodann das Rahmenteil mit dem Verbinderteil verbunden wird. Alternativ kann aber auch vorgesehen sein, dass zunächst das Rahmenteil mit dem Verbinderteil verbunden und danach das Verbinderteil mit dem Gehäuseteil verrastet wird.

Zu Vorteilen und vorteilhaften Ausgestaltungen soll ansonsten auf das vorangehend zu dem Steckverbinderteil Ausgeführte verwiesen werden, das analog auch auf das Verfahren Anwendung findet.

Der der Erfindung zugrunde liegende Gedanke soll nachfolgend anhand der in den Figuren dargestellten Ausführungsbeispiele näher erläutert werden. Es zeigen:
- Fig. 1: eine Ansicht einer Ladestation mit einem daran angeordneten Kabel;
- Fig. 2: eine Ansicht eines Steckverbinderteils in Form einer an einem Fahrzeug anzubringenden Ladebuchse;
- Fig. 3: eine Ansicht eines Ausführungsbeispiels eines Steckverbinderteils, mit einem Gehäuseteil, einem Verbinderteil und einem zum Festlegen eines Abdeckelements an dem Verbinderteil dienenden Rahmenteils;
- Fig. 4: eine Ansicht des Gehäuseteils und des Verbinderteils vor Ansetzen aneinander;
- Fig. 5: eine Ansicht des Gehäuseteils und des Verbinderteils in einer aneinander angesetzten Stellung;
- Fig. 6: eine Ansicht des Gehäuseteils und des Verbinderteils vor Ansetzen des Rahmenteils;
- Fig. 7: eine Vorderansicht des Steckverbinderteils;
- Fig. 8A: eine Schnittansicht entlang der Linie A-A gemäß Fig. 7;
- Fig. 8B: eine vergrößerte Ansicht im Ausschnitt A1 gemäß Fig. 8A;
- Fig. 9A: eine Schnittansicht entlang der Linie B-B gemäß Fig. 7; und
- Fig. 9B: eine vergrößerte Ansicht im Ausschnitt A2 gemäß Fig. 9A.

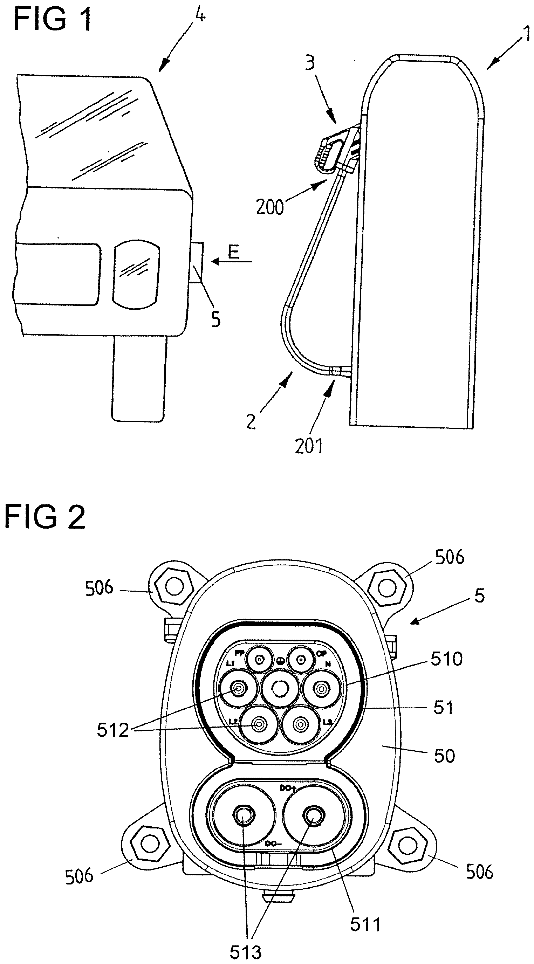

Fig. 1 zeigt eine Ladestation 1, die zum Aufladen eines elektrisch angetriebenen Fahrzeugs 4, auch bezeichnet als Elektrofahrzeug, dient. Die Ladestation 1 ist dazu ausgestaltet, einen Ladestrom in Form eines Wechselstroms oder eines Gleichstroms zur Verfügung zu stellen und weist ein Kabel 2 auf, das mit einem Ende 201 mit der Ladestation 1 und mit einem anderen Ende 200 mit einem Gegensteckverbinderteil 3 in Form eines Ladesteckers verbunden ist.

Das Gegensteckverbinderteil 3 kann steckend mit einem zugeordneten Steckverbinderteil 5 in Form einer Ladebuchse an dem Fahrzeug 4 in Eingriff gebracht werden. Auf diese Weise kann die Ladestation 1 elektrisch mit dem Fahrzeug 4 verbunden werden, um Ladeströme von der Ladestation 1 hin zu dem Fahrzeug 4 zu übertragen.

Ein Ausführungsbeispiel eines Steckverbinderteils 5 in Form einer zum Beispiel an einem Fahrzeug 4 anzuordnenden Ladebuchse zeigt Fig. 2. Das Steckverbinderteil 5 in Form der Ladebuchse weist ein Gehäuseteil 50 auf, das über Befestigungsstellen 506 an einem zugeordneten Fahrzeug zu befestigen ist und an dem ein Verbinderteil 51 zur Ausbildung eines Steckgesichtes angeordnet ist. Das Verbinderteil 51 bildet Steckabschnitte 510, 511 aus, die entlang einer Steckrichtung E (siehe Fig. 1) steckend mit einem zugeordneten Gegensteckverbinderteil 3 verbunden werden können, um elektrische Kontakte 512, 513 an den Steckabschnitten 510, 511 elektrisch mit dem Gegensteckverbinderteil 3 zu kontaktieren und darüber eine elektrische Verbindung zwischen der Ladestation 1 und dem Fahrzeug 4 herzustellen.

Bei dem dargestellten Ausführungsbeispiel sind an einem oberen, ersten Steckabschnitt 510 elektrische Kontaktelemente 512 angeordnet, die insbesondere zum Übertragen eines Ladestroms in Form eines (gegebenenfalls mehrphasigen) Wechselstroms dienen können. An einem unteren, zweiten Steckabschnitt 511 sind demgegenüber Kontaktelemente 513 angeordnet, über die ein Ladestrom in Form eines Gleichstroms hin zu dem Fahrzeug 4 übertragen werden kann. Zusätzlich zu Lastkontakten zum Übertragen eines Ladestroms können an den Steckabschnitten 510, 511 Signalkontakte zum Übertragen von Steuersignalen vorgesehen sein.

Bei einem Steckverbinderteil 5 in Form einer an einem Fahrzeug 4 anzuordnenden Ladebuchse, wie sie beispielhaft in Fig. 2 dargestellt ist, ist das Gehäuseteil 50 üblicherweise für unterschiedliche Fahrzeuge in seiner Gestalt variabel. Das durch das Verbinderteil 51 bereitgestellte Steckgesicht ist demgegenüber genormt, sodass das Steckverbinderteil 5 mit einem entsprechend genormten, komplementären Ladestecker 3 zum Aufladen des Fahrzeugs 4 in Eingriff gebracht werden kann.

Um das Steckverbinderteil 5 zu montieren, muss das Verbinderteil 51 an dem Gehäuseteil 50 befestigt werden, wobei wünschenswert ist, eine vordefinierte Schnittstelle zur Verbindung zu verwenden, sodass für das Verbinderteil 51 ein Gleichteil verwendet werden kann, das mit unterschiedlich gestalteten Gehäuseteilen 50 verbunden werden kann. Dies ermöglicht, ein einheitliches Verbinderteil 51 an ganz unterschiedlichen Gehäuseteilen 50 zu verwenden, was die Teilevielfalt reduziert und zudem den Aufwand und die Kosten bei Konzipierung eines Steckverbinderteils 5 verringert, weil Anpassungen an dem Verbinderteil 51 nicht mehr erforderlich sind.

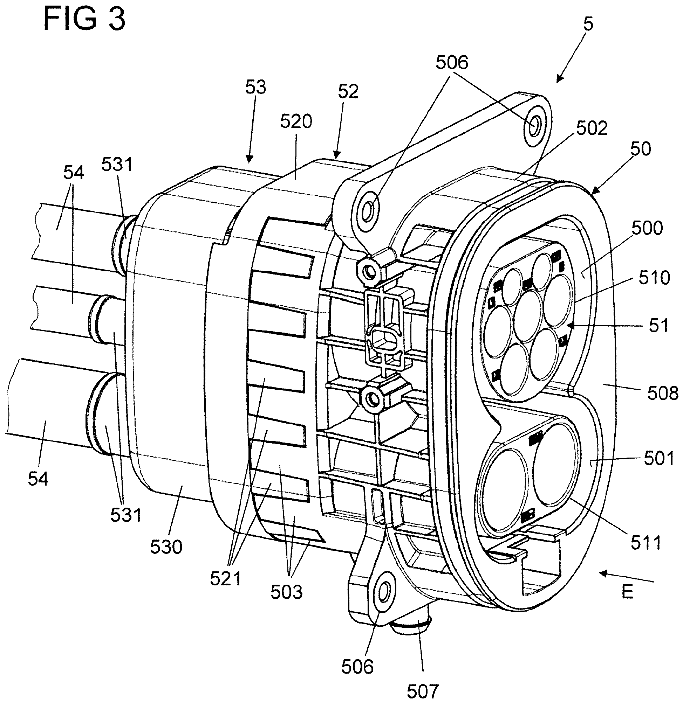

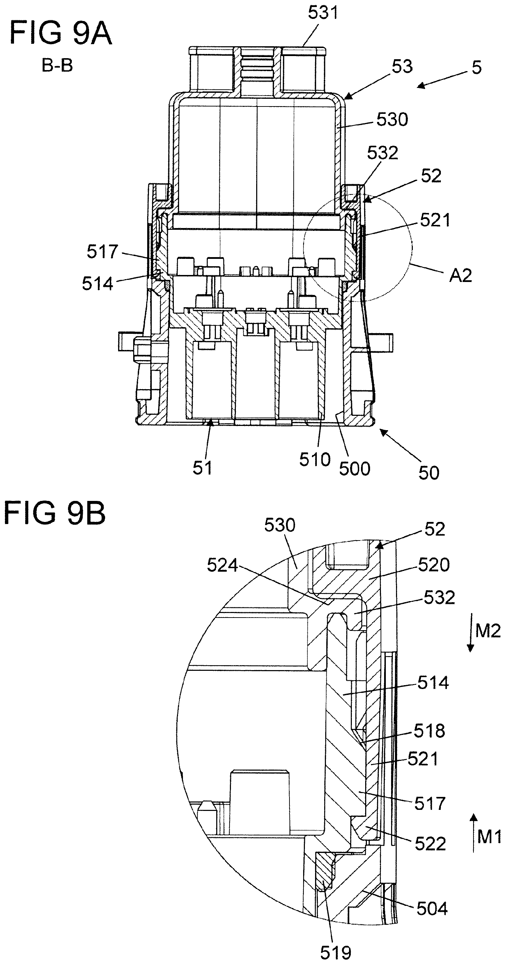

Ein Ausführungsbeispiel eines Steckverbinderteils 5 zeigen Fig. 3 bis 9A, 9B. Das Steckverbinderteil 5 weist bei dem dargestellten Ausführungsbeispiel ein Gehäuseteil 50 auf, das rastend mit einem Verbinderteil 51 zu verbinden ist derart, dass Steckabschnitte 510, 511 des Verbinderteils 51 in zugeordneten Aufnahmeöffnungen 500, 501 an der Vorderseite 508 des Gehäuseteils 50 zu liegen kommen und somit an der Vorderseite 508 ein Steckgesicht zum steckenden Verbinden mit einem zugeordneten Gegensteckverbinderteil 3 ausbilden.

An dem Verbinderteil 51 ist ein Abdeckelement 53 angeordnet, das zum feuchtigkeitsdichten Einfassen von elektrischen Leitungen 54 an dem Verbinderteil 51 dient und dazu über ein Rahmenteil 52 an dem Verbinderteil 51 gehalten ist. Das Abdeckelement 53 weist einen aus einem elastisch verformbaren Material gefertigten Tüllenkörper 530 auf, an dem Leitungsabgänge 531 zum Aufnehmen von elektrischen Leitungen 54 geformt sind, sodass die elektrischen Leitungen 54 in das Abdeckelement 53 eingeführt und an dem Verbinderteil 51 in feuchtigkeitsdichter Weise eingefasst sind, wie dies insbesondere aus Fig. 3 ersichtlich ist.

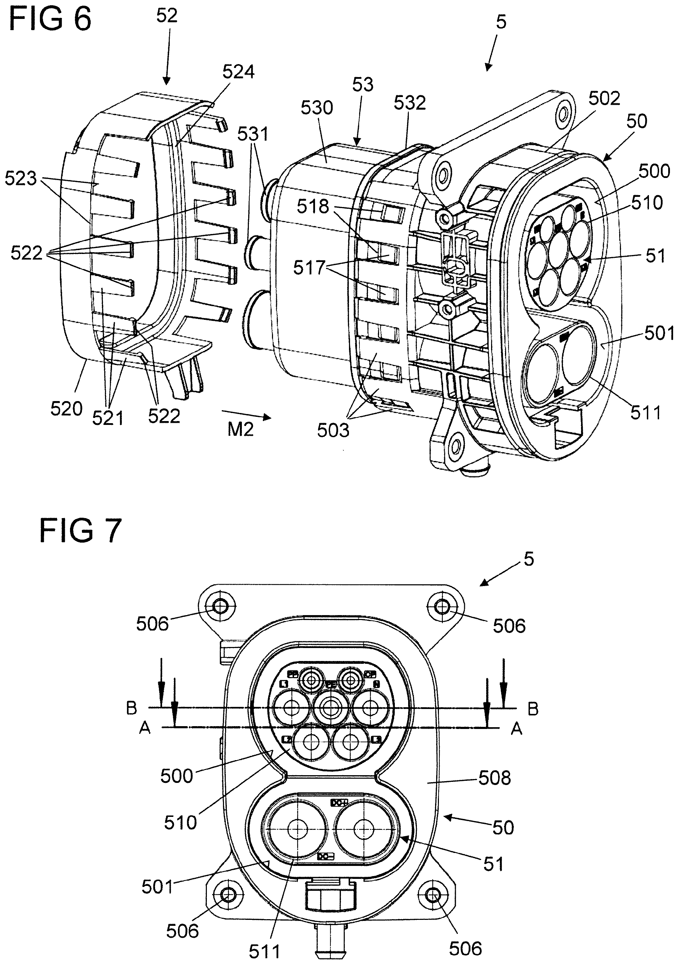

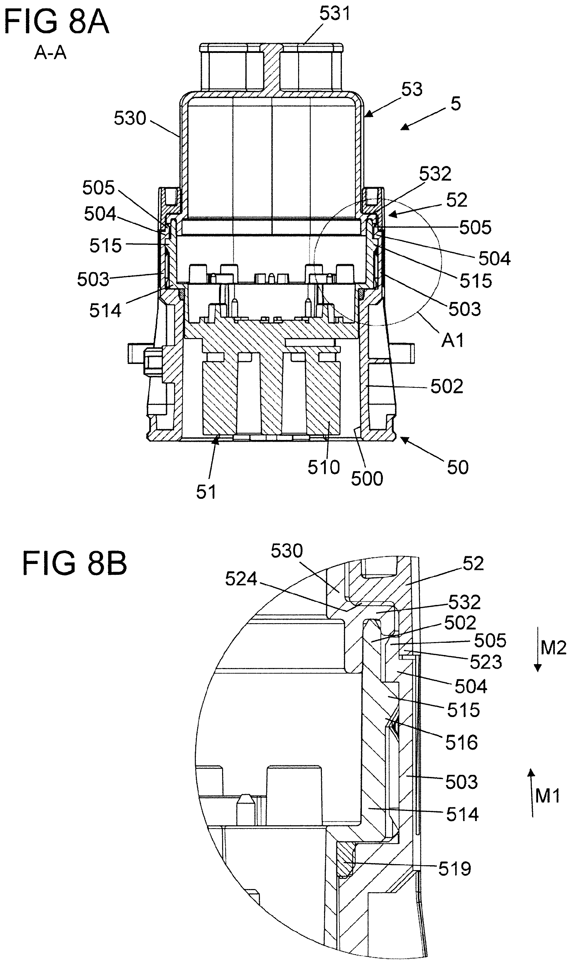

Zur Montage der Steckverbinderteils 5 werden das Gehäuseteil 50, das Verbinderteil 51 und das Rahmenteil 52 rastend miteinander verbunden, indem das Gehäuseteil 50, das Verbinderteil 51 und das Rahmenteil 52 aneinander angesetzt werden. Das Rahmenteil 52 umgreift hierbei mit einem Rahmenkörper 520 einen Randabschnitt 532 des Abdeckelements 53 (siehe Fig. 6 in Zusammenschau mit Fig. 8B und 9B), sodass über das Rahmenteil 52 das Abdeckelement 53 an dem Verbinderteil 51 fixiert wird.

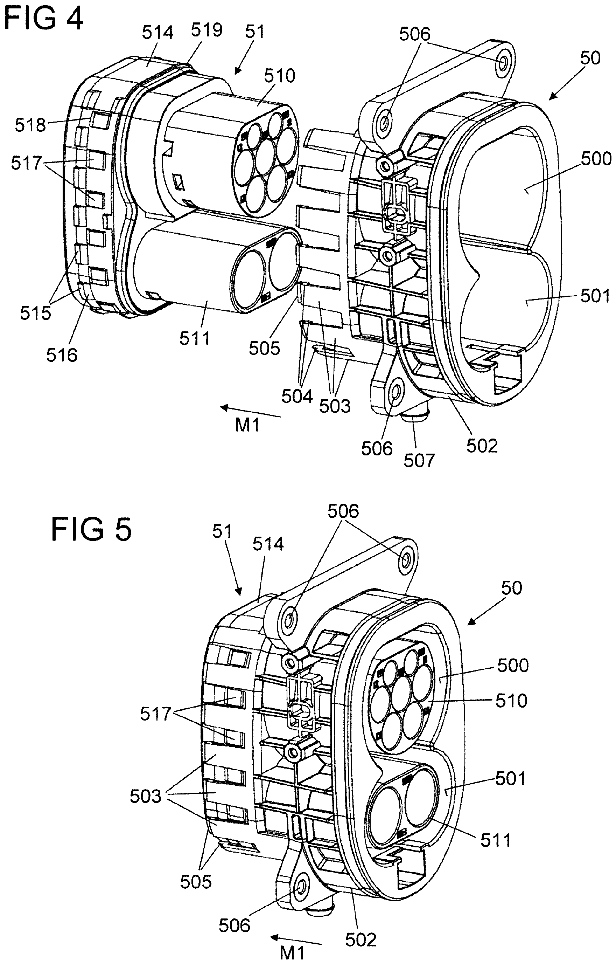

Bei dem dargestellten Ausführungsbeispiel wird zunächst das Gehäuseteil 50 rastend mit dem Verbinderteil 51 verbunden, wie dies in Fig. 4 und 5 dargestellt ist. Das Gehäuseteil 50 weist einen Gehäusekörper 502 auf, von dem axial entlang einer ersten Montagerichtung M1 Rastelemente 503 nach Art von Rastfingern erstreckt sind, die dazu dienen, mit zugeordneten ersten Gegenrastelementen 515 an einem Gehäuse 514 des Verbinderteils 51 zu verrasten, um das Gehäuseteil 50 und das Verbinderteil 51 zueinander festzulegen. Mehrere erste Rastelemente 503 sind hierbei umfänglich verteilt um die ersten Montagerichtung M1 an dem Gehäusekörper 502 geformt, wobei jedes Rastelement 503 einen Rastkopf 504 zum Verrasten mit einem jeweils zugeordneten Gegenrastelement 515 und ein von dem Rastkopf 504 vorstehendes Eingriffselement 505 aufweist.

Zum Verbinden des Gehäuseteils 50 mit dem Verbinderteil 51 wird das Gehäuseteil 50 in die Montagerichtung M1 an das Verbinderteil 51 angesetzt, sodass die Rastelemente 503 des Gehäuseteils 50 mit ihren Rastköpfen 504 auf Auflaufschrägen 516 an den Gegenrastelementen 515 des Verbinderteils 51 auflaufen und somit rastend mit den Gegenrastelementen 515 in Eingriff gelangen, wie dies im Übergang von Fig. 4 hin zu Fig. 5 ersichtlich ist.

Bei dem dargestellten Ausführungsbeispiel wird nach Verbinden des Gehäuseteils 50 mit dem Verbinderteil 51 das Abdeckelement 53 an eine dem Gehäuseteil 50 abgewandte Seite des Verbinderteils 51 angesetzt, wie dies aus Fig. 6 ersichtlich ist, und das Rahmenteil 52 wird zum Beispiel in eine der ersten Montagerichtung M1 entgegengesetzte, zweite Montagerichtung M2 an dem Verbinderteil 51 angeordnet. Das Rahmenteil 52 weist zweite Rastelemente 521 auf, die axial entlang der Montagerichtung M2 von einem umfänglich um die Montagerichtung M2 erstreckten, geschlossenen Rahmenkörper 520 vorstehen und nach Art von Rastfingern mit an den Rastelementen 521 geformten Rastköpfen 522 ausgebildet sind.

Bei Ansetzen des Rahmenteils 52 an das Verbinderteil 51 laufen die Rastelemente 521 mit ihren Rastköpfen 522 auf Auflaufschrägen 518 an zugeordneten zweiten Gegenrastelementen 517 des Verbinderteils 51 auf. In verbundener Stellung sind die Rastelemente 521 mit ihren Rastköpfen 522 mit den zugeordneten Gegenrastelementen 517 an dem Gehäuse 514 des Verbinderteils 51 formschlüssig verrastet, sodass das Rahmenteil 52 mit dem Verbinderteil 51 verbunden und darüber das Abdeckelement 53 zu dem Verbinderteil 51 festgelegt ist.

In montierter Stellung des Steckverbinderteils 5, dargestellt in Fig. 3, greifen die Rastelemente 503 des Gehäuseteils 50 und die Rastelemente 521 des Rahmenteils 52 alternierend ineinander, sodass zwischen zwei Rastelementen 503 des Gehäuseteils 50 ein Rastelement 521 des Rahmenteils 52 zu liegen kommt und umgekehrt.

Die ersten Gegenrastelemente 515 und die zweiten Gegenrastelemente 517 sind jeweils als radial von dem Gehäuse 514 vorstehende, starre Rastvorsprünge an dem Verbinderteil 51 geformt. Die ersten Gegenrastelemente 515 und die zweiten Gegenrastelemente 517 sind hierbei alternierend zueinander angeordnet derart, dass auf ein erstes Gegenrastelement 515 ein zweites Gegenrastelement 517 folgt und umgekehrt, wie dies insbesondere aus Fig. 4 ersichtlich ist.

Wie aus der Schnittansicht gemäß Fig. 8A und der vergrößerten Detailansicht gemäß Fig. 8B ersichtlich ist, steht ein jedes Rastelement 503 des Gehäuseteils 50 in montierter Stellung des Steckverbinderteils 5 formschlüssig mit einem zugeordneten Gegenrastelement 515 des Verbinderteils 51 in Eingriff. Zwischen dem Gehäuseteil 50 und dem Verbinderteil 51 ist hierbei ein Dichtelement 519 angeordnet (das vor Verbinden des Gehäuseteils 50 mit dem Verbinderteil 51 an dem Verbinderteil 51 erstreckt ist, wie dies aus Fig. 4 ersichtlich ist), das einen Übergang zwischen dem Gehäuseteil 50 und dem Verbinderteil 51 feuchtigkeitsdicht abdichtet und zudem eine elastische Vorspannung axial entlang der Montagerichtung M1 bewirkt, die dazu führt, dass die Rastelemente 503 und die Gegenrastelemente 515 unter elastischer axialer Vorspannung miteinander in Eingriff und somit spielfrei entlang der Montagerichtung M1 zueinander gehalten sind.

Wie aus der Schnittansicht gemäß Fig. 9A und der vergrößerten Detailansicht gemäß Fig. 9B ersichtlich ist, steht ein jedes Rastelement 521 des Rahmenteils 52 in der montierten Stellung des Steckverbinderteils 5 formschlüssig mit einem zugeordneten Gegenrastelement 517 des Verbinderteils 51 in Eingriff. Zwischen einer innen in dem Rahmenteil 52 geformten, umlaufenden Anlagekontur 524 und dem Gehäuse 514 des Verbinderteils 51 kommt dabei der Randabschnitt 532 des Abdeckelements 53 zu liegen, wie dies aus Fig. 9B ersichtlich ist. Der Übergang zwischen dem Abdeckelement 53 und dem Verbinderteil 51 ist darüber abgedichtet, wobei der Randabschnitt 532 zusätzlich eine elastische Vorspannung zwischen dem Rahmenteil 52 und dem Verbinderteil 51 bewirkt, die dazu führt, dass die Rastelemente 521 und die Gegenrastelemente 517 spielfrei entlang der Montagerichtung M2 miteinander in Eingriff gehalten werden.

Das Rahmenteil 52 dient dazu, das Abdeckelement 53 zu dem Verbinderteil 51 festzulegen, wobei über die Anlagekontur 524 eine Klemmwirkung auf den Randabschnitt 532 für eine feuchtigkeitsdichte Abdichtung am Übergang zu dem Verbinderteil 51 bewirkt wird. Das Rahmenteil 52 ist hierbei zusätzlich dazu ausgebildet, die Verrastung zwischen dem Gehäuseteil 50 und dem Verbinderteil 51 zu verriegeln, indem das Rahmenteil 52 mit seinem Rahmenkörper 520, insbesondere mit zwischen den Rastelementen 521 geformten Randabschnitten 523 die Eingriffselemente 505 an den Rastelementen 503 des Gehäuseteils 50 umgreift, wie dies aus Fig. 8B ersichtlich ist. Die Rastelemente 503 sind somit in ihrem Eingriff mit den zugeordneten Gegenrastelementen 515 des Verbinderteils 51 gesichert, sodass die Verbindung zwischen dem Gehäuseteil 50 und dem Verbinderteil 51 nicht ohne weiteres, jedenfalls nicht ohne Lösen des Rahmenteils 52, aufgehoben werden kann.

Der der Erfindung zugrunde liegende Gedanke ist nicht auf die vorangehend geschilderten Ausführungsbeispiele beschränkt, sondern lässt sich auch in gänzlich andersgearteter Weise verwirklichen.

Ein Steckverbinderteil der beschriebenen Art kann eine Ladebuchse an einem Elektrofahrzeug verwirklichen, kann aber auch zum Beispiel einen über ein Ladekabel mit einer Ladestation verbundenen Ladestecker ausbilden.

Darüber hinaus kann ein solches Steckverbinderteil auch unabhängig von einem Ladesystem zum Aufladen eines Elektrofahrzeugs zum Einsatz kommen.

Über ein solches Steckverbinderteil können Lastströme in Form eines Gleichstroms oder in Form eines Wechselstroms übertragen werden.

Das Verbinderteil und das Gehäuseteil des Steckverbinderteils können ganz unterschiedlich ausgestaltet sein. Insofern sind das Verbinderteil und das Gehäuseteil insbesondere nicht auf die konkret dargestellten Ausgestaltungen beschränkt.

Bei dem dargestellten Ausführungsbeispiel dient das Rahmenteil (auch) dazu, die rastende Verbindung zwischen dem Gehäuseteil und dem Verbinderteil zu verriegeln. Umgekehrt ist auch denkbar und möglich, insbesondere bei einer Ausgestaltung, bei der das Rahmenteil zunächst mit dem Verbinderteil verbunden und sodann das Gehäuseteil angesetzt wird, das Gehäuseteil dazu auszugestalten, die rastende Verbindung zwischen dem Verbinderteil und dem Rahmenteil zu verriegeln, indem das Gehäuseteil Rastelemente des Rahmenteils umgreift und somit in Eingriff mit zugeordneten Gegenrastelementen des Verbinderteils hält.

### Bezugszeichenliste

- 1: Ladestation
- 2: Ladekabel
- 200,201: Ende
- 3: Gegensteckverbinderteil (Ladestecker)
- 4: Fahrzeug
- 5: Steckverbinderteil (Ladebuchse)
- 50: Gehäuseteil
- 500, 501: Aufnahmeöffnung
- 502: Gehäusekörper
- 503: Rastelement
- 504: Rastkopf
- 505: Eingriffselement
- 506: Befestigungselement
- 507: Anschluss
- 508: Vorderseite
- 51: Verbinderteil
- 510, 511: Steckabschnitt
- 512,513: Kontaktelement
- 514: Gehäuse
- 515: Gegenrastelement
- 516: Auflaufschräge
- 517: Gegenrastelement
- 518: Auflaufschräge
- 519: Dichtelement
- 52: Rahmenteil
- 520: Rahmenkörper
- 521: Rastelement
- 522: Rastkopf
- 523: Randabschnitt
- 524: Anlagekontur
- 53: Abdeckelement
- 530: Tüllenkörper
- 531: Leitungsabgang
- 532: Randabschnitt
- 54: Leitung
- E: Einsteckrichtung
- M 1, M2: Montagerichtung

## Patentansprüche

1. Steckverbinderteil (5) zum Verbinden mit einem Gegensteckverbinderteil (3), mit einem Gehäuseteil (50), einem mit dem Gehäuseteil (50) zu verrastenden Verbinderteil (51), das einen Steckabschnitt (510, 511) aufweist, an dem zumindest ein Kontaktelement (512, 513) zum steckenden Verbinden mit dem Gegensteckverbinderteil (3) angeordnet ist, und einem Abdeckelement (53), das mit dem Verbinderteil (51) zu verbinden ist und zumindest einen Leitungsabgang (531) zum Aufnehmen einer mit dem Verbinderteil (51) verbundenen elektrischen Leitung (54) aufweist, **gekennzeichnet durch** ein Rahmenteil (52), das mit dem Verbinderteil (51) rastend zu verbinden ist und ausgebildet ist, in einer an das Verbinderteil (51) angesetzten Stellung das Abdeckelement (53) zu dem Verbinderteil (51) festzulegen.

2. Steckverbinderteil (5) nach Anspruch 1, **dadurch gekennzeichnet, dass** in der an das Verbinderteil (51) angesetzten Stellung des Rahmenteils (52) das Abdeckelement (53) mit einem Randabschnitt (532) an dem Verbinderteil (51) anliegt und über das Rahmenteil (52) an dem Verbinderteil (51) gehalten ist.

3. Steckverbinderteil (5) nach Anspruch 1 oder 2, **dadurch gekennzeichnet, dass** das Gehäuseteil (50) zumindest ein erstes Rastelement (503) und das Verbinderteil (51) zumindest ein erstes Gegenrastelement (515) aufweisen, wobei das zumindest eine erste Rastelement (503) und das zumindest eine erste Gegenrastelement (515) zum Verbinden des Verbinderteils (51) mit dem Gehäuseteil (50) entlang einer Montagerichtung (M1, M2) rastend miteinander in Eingriff bringbar sind.

4. Steckverbinderteil (5) nach Anspruch 3, **dadurch gekennzeichnet, dass** das zumindest eine erste Gegenrastelement (515) eine Auflaufschräge (518) für das zumindest eine erste Rastelement (503) des Gehäuseteils (50) zum Auflaufen entlang der Montagerichtung (M1, M2) aufweist.

5. Steckverbinderteil (5) nach Anspruch 3 oder 4, **dadurch gekennzeichnet, dass** das Gehäuseteil (50) einen Gehäusekörper (502) aufweist, wobei das zumindest eine erste Rastelement (503) als entlang der Montagerichtung (M1, M2) von dem Gehäusekörper (502) erstreckter Rastfinger ausgebildet ist.

6. Steckverbinderteil (5) nach einem der Ansprüche 3 bis 5, **dadurch gekennzeichnet, dass** das Rahmenteil (52) ausgebildet ist, auf das zumindest eine erste Rastelement (503) des Gehäuseteils (50) einzuwirken, um die rastende Verbindung zwischen dem Gehäuseteil (50) und dem Verbinderteil (51) gegen ein Lösen zu verriegeln.

7. Steckverbinderteil (5) nach einem der vorangehenden Ansprüche, **dadurch gekennzeichnet, dass** das Rahmenteil (52) zumindest ein zweites Rastelement (521) und das Verbinderteil (51) zumindest ein zweites Gegenrastelement (517) aufweisen, wobei das zumindest eine zweite Rastelement (521) und das zumindest eine zweite Gegenrastelement (517) zum Verbinden des Rahmenteils (52) mit dem Verbinderteil (51) entlang einer Montagerichtung (M1, M2) rastend miteinander in Eingriff bringbar sind.

8. Steckverbinderteil (5) nach Anspruch 7, **dadurch gekennzeichnet, dass** das zumindest eine zweite Gegenrastelement (517) eine Auflaufschräge (518) für das zumindest eine zweite Rastelement (521) des Rahmenteils (52) zum Auflaufen entlang der Montagerichtung (M1, M2) aufweist.

9. Steckverbinderteil (5) nach Anspruch 7 oder 8, **dadurch gekennzeichnet, dass** das Rahmenteil (52) einen Rahmenkörper (520) aufweist, wobei das zumindest eine zweite Rastelement (521) als entlang der Montagerichtung (M1, M2) von dem Rahmenkörper (520) erstreckter Rastfinger ausgebildet ist.

10. Steckverbinderteil (5) nach einem der Ansprüche 7 bis 9, **dadurch gekennzeichnet, dass** das Gehäuseteil (50) ausgebildet ist, auf das zumindest eine zweite Rastelement (521) des Rahmenteils (52) einzuwirken, um die rastende Verbindung zwischen dem Verbinderteil (51) und dem Rahmenteil (52) gegen ein Lösen zu verriegeln.

11. Steckverbinderteil (5) nach einem der vorangehenden Ansprüche, **dadurch gekennzeichnet, dass** das Gehäuseteil (50) mehrere erste Rastelemente (503) und das Rahmenteil (52) mehrere zweite Rastelemente (521) aufweisen, wobei in einer montierten Stellung des Steckverbinderteils (5), in der das Gehäuseteil (50), das Verbinderteil (51) und das Rahmenteil (52) miteinander verbunden sind, ein erstes Rastelement (503) zwischen zwei zweiten Rastelementen (521) und/oder ein zweites Rastelement (521) zwischen zwei ersten Rastelementen (503) aufgenommen ist.

12. Steckverbinderteil (5) nach einem der vorangehenden Ansprüche, **dadurch gekennzeichnet, dass** das Verbinderteil (51) ein Gehäuse (514) aufweist, an dem erste Gegenrastelemente (515) zum rastenden Verbinden mit dem Gehäuseteil (50) und zweite Gegenrastelemente (517) zum rastenden Verbinden mit dem Rahmenteil (52) entlang einer Umfangsrichtung alternierend zueinander angeordnet sind.

13. Steckverbinderteil (5) nach einem der vorangehenden Ansprüche, **gekennzeichnet durch** ein Dichtelement (519), das bei mit dem Gehäuseteil (50) verrasteten Verbinderteil (51) einen Übergang zwischen dem Gehäuseteil (50) und dem Verbinderteil (51) feuchtigkeitsdicht abdichtet.

14. Verfahren zum Montieren eines Steckverbinderteils (5) zum Verbinden mit einem Gegensteckverbinderteil (3), bei dem ein Verbinderteil (51), das einen Steckabschnitt (510, 511) aufweist, an dem zumindest ein Kontaktelement (512, 513) zum steckenden Verbinden mit dem Gegensteckverbinderteil (3) angeordnet ist, mit einem Gehäuseteil (50) verrastet und ein Abdeckelement (53), das zumindest einen Leitungsabgang (531) zum Aufnehmen einer mit dem Verbinderteil (51) verbundenen elektrischen Leitung (54) aufweist, mit dem Verbinderteil (51) verbunden wird, **dadurch gekennzeichnet, dass** ein Rahmenteil (52) mit dem Verbinderteil (51) rastend verbunden wird, wobei das Rahmenteil (52) in einer an das Verbinderteil (51) angesetzten Stellung das Abdeckelement (53) zu dem Verbinderteil (51) festlegt.

15. Verfahren nach Anspruch 14, **dadurch gekennzeichnet, dass** zunächst das Verbinderteil (51) mit dem Gehäuseteil (50) verrastet und danach das Rahmenteil (52) mit dem Verbinderteil (51) verbunden wird oder zunächst das Rahmenteil (52) mit dem Verbinderteil (51) verbunden und danach das Verbinderteil (51) mit dem Gehäuseteil (50) verrastet wird.

## Claims

1. Plug-in connector part (5) for connection to a mating plug-in connector part (3), having a housing part (50), a connector part (51) which is to be latched to the housing part (50) and which has a plug-in portion (510, 511) on which at least one contact element (512, 513) for plug-in connection to the mating plug-in connector part (3) is arranged, and a cover element (53) which is to be connected to the connector part (51) and which has at least one line outlet (531) for receiving an electrical line (54) which is connected to the connector part (51), **characterized by** a frame part (52) which is to be connected to the connector part (51) in a latching manner and which is configured to fix the cover element (53) relative to the connector part (51) in a position fitted onto the connector part (51).

2. Plug-in connector part (5) according to Claim 1, **characterized in that**, in the position in which the frame part (52) is fitted onto the connector part (51), the cover element (53) bears against the connector part (51) by way of a peripheral portion (532) and is held on the connector part (51) by means of the frame part (52).

3. Plug-in connector part (5) according to Claim 1 or 2, **characterized in that** the housing part (50) has at least one first latching element (503) and the connector part (51) has at least one first mating latching element (515), wherein the at least one first latching element (503) and the at least one first mating latching element (515) can be brought into latching engagement with one another to connect the connector part (51) to the housing part (50) along an assembly direction (M1, M2).

4. Plug-in connector part (5) according to Claim 3, **characterized in that** the at least one first mating latching element (515) has a run-on bevel (518) for the at least one first latching element (503) of the housing part (50) for running on along the assembly direction (M1, M2).

5. Plug-in connector part (5) according to Claim 3 or 4, **characterized in that** the housing part (50) has a housing body (502), wherein the at least one first latching element (503) is in the form of a latching finger which extends from the housing body (502) along the assembly direction (M1, M2).

6. Plug-in connector part (5) according to one of Claims 3 to 5, **characterized in that** the frame part (52) is configured to act on the at least one first latching element (503) of the housing part (50), in order to lock the latching connection between the housing part (50) and the connector part (51) against releasing.

7. Plug-in connector part (5) according to one of the preceding claims, **characterized in that** the frame part (52) has at least one second latching element (521) and the connector part (51) has at least one second mating latching element (517), wherein the at least one second latching element (521) and the at least one second mating latching element (517) can be brought into latching engagement with one another to connect the frame part (52) to the connector part (51) along an assembly direction (M1, M2).

8. Plug-in connector part (5) according to Claim 7, **characterized in that** the at least one second mating latching element (517) has a run-on bevel (518) for the at least one second latching element (521) of the frame part (52) for running on along the assembly direction (M1, M2).

9. Plug-in connector part (5) according to Claim 7 or 8, **characterized in that** the frame part (52) has a frame body (520), wherein the at least one second latching element (521) is in the form of a latching finger which extends from the frame body (520) along the assembly direction (M1, M2).

10. Plug-in connector part (5) according to one of Claims 7 to 9, **characterized in that** the housing part (50) is configured to act on the at least one second latching element (521) of the frame part (52), in order to lock the latching connection between the connector part (51) and the frame part (52) against releasing.

11. Plug-in connector part (5) according to one of the preceding claims, **characterized in that** the housing part (50) has a plurality of first latching elements (503) and the frame part (52) has a plurality of second latching elements (521), wherein, in an assembled position of the plug-in connector part (5), in which the housing part (50), the connector part (51) and the frame part (52) are connected to one another, a first latching element (503) is received between two second latching elements (521) and/or a second latching element (521) is received between two first latching elements (503).

12. Plug-in connector part (5) according to one of the preceding claims, **characterized in that** the connector part (51) has a housing (514) on which first mating latching elements (515) for latching connection to the housing part (50) and second mating latching elements (517) for latching connection to the frame part (52) are arranged in an alternating manner with respect to one another along a peripheral direction.

13. Plug-in connector part (5) according to one of the preceding claims, **characterized by** a sealing element (519) which, when the connector part (51) is latched to the housing part (50), seals a transition between the housing part (50) and the connector part (51) in a moisture-tight manner.

14. Method for assembling a plug-in connector part (5) for connection to a mating plug-in connector part (3), in which a connector part (51), which has a plug-in portion (510, 511) on which at least one contact element (512, 513) for plug-in connection to the mating plug-in connector part (3) is arranged, is latched to a housing part (50), and a cover element (53), which has at least one line outlet (531) for receiving an electrical line (54) which is connected to the connector part (51), is connected to the connector part (51), **characterized in that** a frame part (52) is connected to the connector part (51) in a latching manner, wherein the frame part (52) fixes the cover element (53) relative to the connector part (51) in a position fitted onto the connector part (51).

15. Method according to Claim 14, **characterized in that** first the connector part (51) is latched to the housing part (50) and then the frame part (52) is connected to the connector part (51), or first the frame part (52) is connected to the connector part (51) and then the connector part (51) is latched to the housing part (50).

## Revendications

1. Pièce de connecteur enfichable (5) à relier à une contre-pièce de connecteur enfichable (3), avec une pièce de carter (50), une pièce de connecteur (51) à encliqueter avec la pièce de carter (50) et comportant une section d'enfichage (510, 511) au niveau de laquelle au moins un élément de contact (512, 513) est disposé avec la contre-pièce de connecteur enfichable (3) pour réaliser la liaison enfichée et avec un élément de recouvrement (53) à relier à la pièce de connecteur (51) et comportant au moins une sortie de câble (531) destinée à recevoir un câble électrique (54) relié à la pièce de connecteur (51), **caractérisée par** la présence d'une pièce de cadre (52) à relier par encliquetage à la pièce de connecteur (51) et réalisée pour fixer, dans une position butant contre la pièce de connecteur (51), l'élément de recouvrement (53) par rapport à la pièce de connecteur (51) .

2. Pièce de connecteur enfichable (5) selon la revendication 1, **caractérisée en ce que** dans la position de la pièce de cadre (52) butant contre la pièce de connecteur (51), l'élément de recouvrement (53) bute avec une section de bordure (532) contre la pièce de connecteur (51) et est maintenue contre la pièce de connecteur (51) par le biais de la pièce de cadre (52).

3. Pièce de connecteur enfichable (5) selon la revendication 1 ou 2, **caractérisée en ce que** la pièce de carter (50) comporte au moins un premier élément d'arrêt (503) et que la pièce de connecteur (51) comporte au moins un premier contre-élément d'arrêt (515), l'au moins un premier élément d'arrêt (503) et l'au moins un premier contre-élément d'arrêt (515) pouvant être amenés en prise entre eux dans une position d'arrêt afin de relier la pièce de connecteur (51) à la pièce de carter (50) le long d'une direction de montage (M1, M2).

4. Pièce de connecteur enfichable (5) selon la revendication 3, **caractérisée en ce que** l'au moins un premier contre-élément d'arrêt (515) comporte un plan incliné (518) pour l'au moins un premier élément d'arrêt (503) de la pièce de carter (50) afin de glisser le long de la direction de montage (M1, M2).

5. Pièce de connecteur enfichable (5) selon la revendication 3 ou 4, **caractérisée en ce que** la pièce de carter (50) comporte un corps de carter (502), l'au moins un premier élément d'arrêt (503) étant réalisé sous la forme de doigts d'arrêt s'étendant le long de la direction de montage (M1, M2) depuis le corps de carter (502) .

6. Pièce de connecteur enfichable (5) selon l'une quelconque des revendications 3 à 5, **caractérisée en ce que** la pièce de cadre (52) est réalisée pour agir sur l'au moins un premier élément d'arrêt (503) de la pièce de carter (50) afin de verrouiller la liaison à bloquer entre la pièce de carter (50) et la pièce de connecteur (51) de façon à empêcher tout détachement.

7. Pièce de connecteur enfichable (5) selon l'une quelconque des revendications précédentes, **caractérisée en ce que** la pièce de cadre (52) comporte au moins un deuxième élément d'arrêt (521) et que la pièce de connecteur (51) comporte au moins un deuxième contre-élément d'arrêt (517), l'au moins un deuxième élément d'arrêt (521) et l'au moins un deuxième contre-élément d'arrêt (517) pouvant être amenés en prise entre eux dans une position d'arrêt afin de relier la pièce de cadre (52) avec la pièce de connecteur (51) le long d'une direction de montage (M1, M2).

8. Pièce de connecteur enfichable (5) selon la revendication 7, **caractérisée en ce que** l'au moins un deuxième contre-élément d'arrêt (517) comporte un plan incliné (518) pour l'au moins un deuxième élément d'arrêt (521) de la pièce de cadre (52) afin de glisser le long de la direction de montage (M1, M2).

9. Pièce de connecteur enfichable (5) selon la revendication 7 ou 8, **caractérisée en ce que** la pièce de cadre (52) comporte un corps de cadre (520), l'au moins un deuxième élément d'arrêt (521) étant réalisé sous la forme de doigts d'arrêt s'étendant le long de la direction de montage (M1, M2) depuis le corps de cadre (520).

10. Pièce de connecteur enfichable (5) selon l'une quelconque des revendications 7 à 9, **caractérisée en ce que** la pièce de carter (50) est réalisée pour agir sur l'au moins un deuxième élément d'arrêt (521) de la pièce de cadre (52) afin de verrouiller la liaison à arrêter entre la pièce de connecteur (51) et la pièce de cadre (52) de façon à empêcher tout détachement.

11. Pièce de connecteur enfichable (5) selon l'une quelconque des revendications précédentes, **caractérisée en ce que** la pièce de carter (50) comporte plusieurs premiers éléments d'arrêt (503) et que la pièce de cadre (52) comporte plusieurs deuxièmes éléments d'arrêt (521), sachant que dans une position montée de la pièce de connecteur enfichable (5) dans laquelle la pièce de carter (50), la pièce de connecteur (51) et la pièce de cadre (52) sont reliées entre elles, un premier élément d'arrêt (503) est logé entre deux deuxièmes éléments d'arrêt (521) et/ou qu'un deuxième élément d'arrêt (521) est logé entre deux premiers éléments d'arrêt (503).

12. Pièce de connecteur enfichable (5) selon l'une quelconque des revendications précédentes, **caractérisée en ce que** la pièce de connecteur (51) comporte un carter (514) au niveau duquel des premiers contre-éléments d'arrêt (515) sont disposés de façon alternée les uns par rapport aux autres le long d'une direction périphérique pour réaliser la liaison à bloquer avec la pièce de carter (50) et des deuxièmes contre-éléments d'arrêt (517) sont disposés de façon alternée les uns par rapport aux autres le long d'une direction périphérique pour réaliser la liaison à bloquer avec la pièce de cadre (52).

13. Pièce de connecteur enfichable (5) selon l'une quelconque des revendications précédentes, **caractérisée par** un élément d'étanchéité (519) qui étanchéifie de façon étanche à l'humidité une transition entre la pièce de carter (50) et la pièce de connecteur (51) en cas de pièce de connecteur (51) encliquetée avec la pièce de carter (50).

14. Procédé de montage d'une pièce de connecteur enfichable (5) à relier à une contre-pièce de connecteur enfichable (3), dans lequel une pièce de connecteur (51) qui comporte une section d'enfichage (510, 511) est disposée au niveau de l'au moins un élément de contact (512, 513) pour réaliser la liaison enfichée avec la contre-pièce de connecteur enfichable (3), s'encliquète avec une pièce de carter (50) et dans lequel un élément de recouvrement (53) qui comporte au moins une sortie de câble (531) destinée à recevoir un câble électrique (54) relié à la pièce de connecteur (51) est relié à la pièce de connecteur (51), **caractérisé en ce qu'**une pièce de cadre (52) est reliée de façon arrêtée à la pièce de connecteur (51), la pièce de cadre (52) fixant, dans une position butant contre la pièce de connecteur (51), l'élément de recouvrement (53) par rapport à la pièce de connecteur (51).

15. Procédé selon la revendication 14, **caractérisé en ce que** la pièce de connecteur (51) est d'abord encliquetée avec la pièce de carter (50) puis que la pièce de cadre (52) est reliée à la pièce de connecteur (51) ou que la pièce de cadre (52) est d'abord reliée à la pièce de connecteur (51) puis que la pièce de connecteur (51) est encliquetée avec la pièce de carter (50) .
